# EUROPÄISCHE PATENTSCHRIFT

(11) **EP 3 137 350 B1**
(45) Veröffentlichungstag und Bekanntmachung des Hinweises auf die Patenterteilung: **28.10.2020**
(21) Anmeldenummer: 15722034.4
(22) Anmeldetag: 31.03.2015
(51) Int. Cl.: B60T 7/04, B60T 8/40, B60T 13/66

(54) **VORRICHTUNG ZUR KRAFTSIMULATION AN EINEM BETÄTIGUNGSELEMENT EINES FAHRZEUGES, VORZUGSWEISE EIN PEDALSIMULATOR, UND EINRICHTUNG ZUR BETÄTIGUNG EINES ELEKTRISCHEN KUPPLUNGSSYSTEMS**
DEVICE FOR FORCE SIMULATION AT A SERVICE ELEMENT, PREFERABLY A PEDAL SIMULATOR, AND ARRANGEMENT TO ACTIVATE AN ELECTRIC CLUTCH SYSTEM
DISPOSITIF DE SIMULATION DE FORCE POUR UN ÉLÉMENT DE SERVICE, DE PRÉFÉRENCE UN SIMULATEUR DE PEDAL, ET ARRANGEMENT POUR ACTIVER UN SYSTÈME D'EMBRAYAGE ÉLECTRIQUE

(30) Priorität: 29.04.2014 DE 102014207981
(43) Veröffentlichungstag der Anmeldung: 08.03.2017
(73) Patentinhaber: Schaeffler Technologies AG & Co. KG, 91074 Herzogenaurach (DE)
(72) Erfinder: FIORINI, Francesco Emanuele, 32758 Detmold (DE); HONSELMANN, Sebastian, 77886 Lauf (DE)
(86) Internationale Anmeldenummer: PCT/DE2015/200216
(87) Internationale Veröffentlichungsnummer: WO 2015/165451

(56) Entgegenhaltungen:
- DE-A1- 3 830 836
- DE-A1-102011 016 240
- US-A1- 2014 069 093

## Beschreibung

Die Erfindung betrifft eine Vorrichtung zur Kraftsimulation an einem Betätigungselement eines Fahrzeuges, vorzugsweise einen Pedalsimulator, welcher eine haptische Rückmeldung über ein vorgegebenes Kraft-Weg-Verhalten vermittelt, umfassend eine Kolben-Zylinder-Einheit, wobei ein Kolben über eine Kolbenstange mit dem Betätigungselement verbunden ist, welches den Kolben innerhalb des Zylinders axial bewegt sowie eine Einrichtung zur Betätigung eines elektrischen Kupplungssystems mit einer solchen Vorrichtung.

Die DE 10 2011 016 240 und die DE 10 2011 016 239 offenbaren Vorrichtungen dieser Art.

Aus der DE 10 2011 016 239 A1 ist ein Pedalkraftsimulator für eine Fahrzeugbremsanlage mit elektronischer Signalübertragung bekannt, bei der eine, von der Fußkraft des Fahrzeugführers abhängige Aussteuerung des Bremsmomentes, insbesondere mittels elektro-hydraulischer oder elektro-mechanischer Systeme vorgenommen wird, wobei der Pedalkraftsimulator ein für einen Fahrzeugführer gewohntes Bremsgefühl generiert. Der Pedalkraftsimulator umfasst eine pneumatisch arbeitende Kolben-Zylinder-Einheit, deren Kolben eine Kompressionskammer mit einem ansteuerbaren Ventil begrenzt und entgegen der Kompressionsrichtung mittels zumindest eines ersten Federelementes den Kolben mit einer Kraft belastet sowie über eine Kolbenstange mit einem Fahrzeugbremspedal derart wirkverbunden ist, dass die Kolbenstange während der Betätigung des Fahrzeugbremspedals eine Winkeländerung relativ zur Kolben-Zylinder-Einheit erfährt. Diese Winkelbeweglichkeit stellt hohe Anforderungen an die Konstruktion des Pedalkraftsimulators.

Die DE 10 2010 061 439 A1 offenbart ein Bremssystem für ein Kraftfahrzeug, bei welchem ein Bremspedal, das von einem Fahrzeugführer betätigbar ist, mit einem Pedalsimulator zur Erzeugung einer wegabhängigen Gegen- bzw. Rückstellkraft verbunden ist. Die Stellung des Bremspedals wird mittels eines Sensors erfasst und dessen Sensorsignal dem Steuergerät zur Auswertung zugeführt. Entsprechend der Stellung des Bremspedals erzeugt das Steuergerät Steuersignale für eine Antriebssteuereinheit und eine Bremssteuereinrichtung, so dass ein dadurch erzeugter generatorischer Bremsanteil zusammen mit dem Reibungsbremsanteil ein Bremsmoment bzw. eine Bremswirkung erzeugt, die der Stellung des Bremspedals entspricht. Gleichzeitig wird der Pedalsimulator von dem Steuergerät derart angesteuert, dass auf das Bremspedal eine Gegenkraft bzw. Rückstellkraft wirkt, sich also eine Weg-Kraft-Abhängigkeit einstellt, die dem Fahrer ein Pedalgefühl wie bei einer Bremsung ausschließlich mit einer hydraulischen Bremsanlage gibt.

Der Erfindung liegt die Aufgabe zugrunde, eine Vorrichtung zur Kraftsimulation an einem Betätigungselement eines Fahrzeuges anzugeben, welche dem Fahrzeugführer das gleiche Gefühl übermittelt wie bei einer normalen hydraulischen Anlage und trotzdem einfach herstellbar ist.

Erfindungsgemäß wird die Aufgabe dadurch gelöst, dass in den Zylinder annähernd senkrecht zur Bewegungsrichtung des Kolbens ein Widerstandselement hineinragt, an welchem der Kolben ab einer gewissen Stellung des Betätigungselementes, reibend entlang bewegbar ist.

Dies hat den Vorteil, dass auch bei einem nicht hydraulischen Betätigungssystem, insbesondere einem rein elektrischen Fahrzeugkupplungssystem, dem Fahrzeugnutzer das gleiche haptische Gefühl übermittelt wird, wie bei einem normalen hydraulischen Betätigungssystem. Die Vorrichtung zur Kraftsimulation simuliert dabei eine Kraft-Weg-Kennlinie, wobei die Kraft, welche am Fuß oder an der Hand des Fahrzeugnutzers über das Betätigungselement angreift, in Abhängigkeit des durch den Arbeitskolben zurückgelegten Weges und der dabei am Widerstandselement entstehenden Reibung hervorgerufen wird. Die Größe der Vorrichtung zur Kraftsimulation entspricht der Größe eines Geberzylinders bei einem hydraulischen Kupplungsbetätigungssystem, so dass keine weiteren Anforderungen an den Platzbedarf im Kraftfahrzeug gestellt werden, weshalb der Kraftsimulator anstelle des Geberzylinders an derselben Stelle im Kraftfahrzeug eingebaut werden kann. Unter einem Widerstandselement soll im Weiteren ein vorsprungähnliches Element verstanden werden, welches dem Kolben bei seiner Bewegung einen mechanischen Widerstand entgegensetzt.

Vorteilhafterweise ist das Widerstandselement durchgehend an einem Innenumfang des Zylinders angeordnet und weist eine Öffnung auf. Der Kolben greift bei seiner Bewegung in die Öffnung des Widerstandselementes ein und wird infolge der Berührung mit dem Widerstandselement umfangsseitig mit der auftretenden Reibkraft beaufschlagt. Durch diese auftretende Reibkraft wird ein Kraftunterschied erzeugt, welcher am Betätigungselement haptisch durch den Fahrzeugnutzer spürbar ist.

In einer Ausgestaltung ist eine Außenkontur des Kolbens in Richtung des Widerstandselementes sinusähnlich ausgebildet. Durch diese Kolbenkontur sind die Kraftunterschiede dem durch das Betätigungselement zurückgelegten Weg zuordenbar, was eine sehr feinfühlige Einstellung der Kraft-Weg-Kennlinie gewährleistet.

In einer Variante ist der Kolben als Sekundärkolben ausgebildet, welcher in die Öffnung des Widerstandselementes eingreift und an einem mit der Kolbenstange verbundenen Arbeitskolben befestigt ist. Da der Sekundärkolben einen kleineren Durchmesser als der Arbeitskolben aufweist, erhöht sich bei konstanter Reibfläche der durch das Betätigungselement aufzuwendende Druck, um diese und somit den Kolben zu bewegen. Dadurch werden schon bei der Überwindung einen geringen Weges Druckunterschiede am Betätigungselement durch den Fahrzeugnutzer deutlich wahrnehmbar.

In einer Ausführungsform weist die Öffnung des Widerstandselementes einen variablen Durchmesser auf. Der Durchmesser ist in Abhängigkeit der Betätigungsgeschwindigkeit des Betätigungselementes vergrößerbar oder verkleinerbar. Dadurch kann ein Pedalsimulator einfach an die Anforderungen verschiedener Kupplungssysteme angepasst werden.

In einer weiteren Variante weist das Widerstandselement ein, die Öffnung umgebendes Reibelement auf, dessen Reibkraft von einem Stellglied, vorzugsweise einem Stellmotor einstellbar ist. Durch ein solches Reibelement, wird eine Bremskraft des Kolbens und somit die haptische Wahrnehmung durch den Fahrzeugnutzer vergrößert. Die Reibkraft wird durch das Stellglied in Abhängigkeit von einer Betätigungsgeschwindigkeit und/oder eines Weges des Betätigungselementes eingestellt.

In einer anderen Variante sind die Kolbenstange und der Zylinder, zumindest teilweise, mit einer Rückstellfeder verbunden, so dass bei Nachlassen der Betätigung des Betätigungselementes durch den Fahrzeugnutzer das Betätigungselement wieder in seine ursprüngliche Stellung zurückkehren kann.

Eine Weiterbildung der Erfindung betrifft eine Einrichtung zur Betätigung eines elektrischen Kupplungssystems, bei welchem ein Betätigungselement mit einer Vorrichtung zur Kraftsimulation an dem Betätigungselement verbunden ist, wobei die Stellung des Betätigungselementes von einem Sensorelement erfasst und elektrisch an eine Steuereinheit weitergegeben wird, welche mit einer Kupplung in einer Wirkverbindung steht. Die Vorrichtung zur Kraftsimulation ist dabei nach mindestens einem der in dieser Schutzrechtsanmeldung ausgeführten Merkmale ausgebildet. Dies hat den Vorteil, dass bei einem elektrischen Kupplungssystem an dem Betätigungselement von dem Fahrzeugnutzer genau dieselbe Kraft wahrgenommen wird, wie bei einem hydraulischen oder pneumatischen Kupplungssystem.

Vorteilhafterweise weist die Steuereinheit eine als Aktor ausgebildete Leistungseinheit zur Ansteuerung der Kupplung auf, welche mit der Kupplung mechanisch oder hydraulisch oder pneumatisch gekoppelt ist. Somit ist die Vorrichtung zur Kraftsimulation an einem Betätigungselement eines Fahrzeuges in einer beliebigen Form der Betätigungselemente einsetzbar.

In einer Ausgestaltung ist die Steuereinheit über eine Reibkraftsteuereinheit und ein elektrisches, hydraulisches oder pneumatisches Stellglied mit einem Reibelement des Widerstandselementes verbunden. Durch diese Steuerung wird eine zuverlässige Einstellung der Reibkraft des Reibelementes am Kolben in Abhängigkeit von der Betätigung des Betätigungselementes generiert.

Die Erfindung lässt zahlreiche Ausführungsformen zu. Eine davon soll anhand der in der Zeichnung dargestellten Figuren näher erläutert werden.

Es zeigen:
- Figur 1:: eine Prinzipdarstellung eines elektrischen Kupplungsbetätigungssystems,
- Figur 2:: ein Ausführungsbeispiel für einen Pedalsimulator des elektrischen Kupplungsbetätigungssystems gemäß Figur 1,
- Figur 3:: ein Ausführungsbeispiel eines Reibelementes.

Gleiche Merkmale sind mit gleichen Bezugszeichen gekennzeichnet.

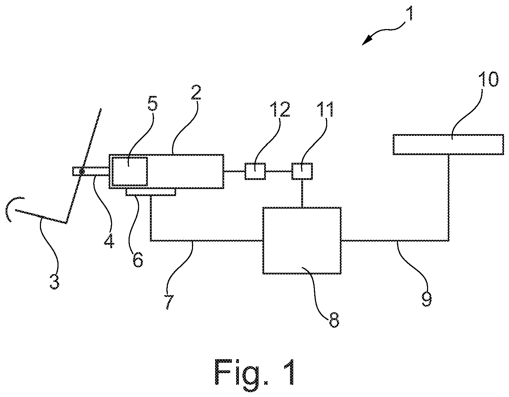

In Figur 1 ist eine Prinzipdarstellung eines elektrisches Kupplungsbetätigungssystems dargestellt, welches auch als Clutch-by-Wire- System bezeichnet wird. Das elektrische Kupplungsbetätigungssystem 1 umfasst einen Pedalsimulator 2, der mechanisch mit einem Kupplungspedal 3 verbunden ist. Das Kupplungspedal 3 betätigt über eine Kolbenstange 4 einen, in dem Pedalsimulator 2 axial beweglich gelagerten Arbeitskolben 5. Die Bewegung des Arbeitskolbens 5 wird durch eine Wegsensoreinheit 6 detektiert, die mit dem Pedalsimulator 2 verbunden und vorzugsweise in diesem integriert ist. Über eine elektrische Leitung 7 ist die Wegsensoreinheit 6 mit einer Steuer- und Leistungseinheit 8 verbunden. Neben der Steuerelektronik umfasst die Steuer- und Leistungseinheit 8 einen Aktor, welcher über eine weitere Leitung 9 die Kupplung 10 ansteuert. Die Leitung 9 ist im vorliegenden Fall als hydraulische Leitung ausgebildet. Die Ansteuerung der Kupplung 10 kann alternativ aber auch pneumatisch oder mechanisch erfolgen. Darüber hinaus ist die Steuer- und Leistungseinheit 8 elektrisch mit einer Reibkraftsteuereinheit 11 verbunden, welche ein Stellglied 12 ansteuert, das an den Pedalsimulator 2 führt.

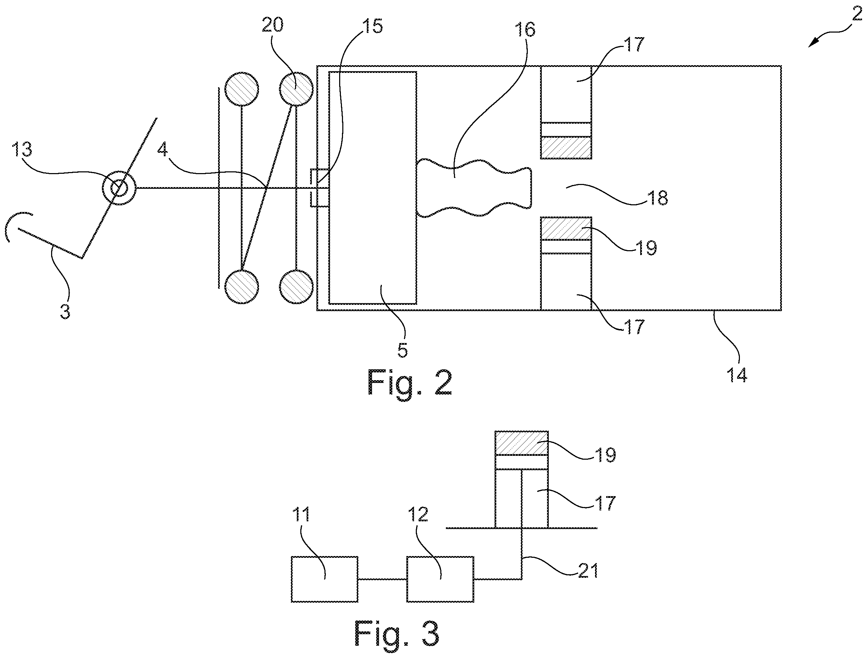

In Figur 2 ist ein Ausführungsbeispiel des Pedalsimulators 2 gezeigt, wie dieser in dem Kupplungsbetätigungssystem 1 gemäß Figur 1 verwendet wird. Das Kupplungspedal 3 ist über einen Anschluss 13 an der Kupplungsstange 4 befestigt. Innerhalb eines Zylinders 14 wird der Arbeitskolben 5 über die Kupplungsstange 4 in Abhängigkeit von der Stellung des Kupplungspedals 3 axial bewegt. Der Zylinder 14 weist an einem Ende ein Führungselement 15, beispielsweise eine Dichtung oder eine Wandöffnung, auf, in welcher die Kolbenstange 4 axial gelagert ist. Am Vorderende der Kolbenstange 4 ist der Arbeitskolben 5 mit dieser verbunden und an der Zylinderinnenwand umfangsseitig geführt.

An der Stirnseite des Arbeitskolbens 5 ist ein Sekundärkolben 16 befestigt, welcher sich in Richtung eines Widerstandselementes 17, das radial in den Innenraum des Zylinders 14 hineinragt, erstreckt. Die Oberflächenkontur des Sekundärkolbens 16 ist in seiner Längserstreckung sinusähnlich gestaltet.

Das Widerstandselement 17, welches kreisringförmig aufgebaut ist und am Innenumfang des Zylinders 14 befestigt ist, weist eine Öffnung 18 mit einem variablen Durchmesser auf, in welche bei der Bewegung des Kupplungspedals 3 der Sekundärkolben 16 eindringt. Der Öffnung 18 zugewandt trägt das Widerstandselement 17 ein Reibelement 19, vorzugsweise einen Bremsbacken, dessen Position und somit die Größe der Öffnung 18 von dem Stellglied 12, welches als elektrischer, pneumatischer oder hydraulischer Motor ausgebildet sein kann, bestimmt wird. Das Stellglied 12 wird dabei von der Reibkraftsteuereinheit 11 in Abhängigkeit der Betätigungsgeschwindigkeit des Fahrpedals 3 angesteuert (Figur 3). Um die Kolbenstange 4 und den Zylinder 14 ist teilweise eine Rückstellfeder 20 angeordnet.

Der beschriebene Pedalsimulator 2 funktioniert wie folgt: Bei der Betätigung des Kupplungspedals 3 wird die Pedalbewegung über den Anschluss 13 in eine entsprechende Vorschubbewegung der Kolbenstange 4 umgesetzt. Hierbei wird zum einen die Rückstellfeder 20 zusammengedrückt und gespannt, wodurch eine rückstellende Reaktionskraft entsteht. Außerdem wird der an der Kolbenstange 4 befestigte Arbeitskolben 5 gemeinsam mit dem Sekundärkolben 16 gegenüber dem ortsfest gelagerten Zylinder 14 innerhalb diesem vorwärtsbewegt. Dabei greift der Sekundärkolben 16 in die Öffnung 18 des Widerstandselementes 17 ein. Da der Durchmesser des Sekundärkolbens 16 annähernd mit dem Durchmesser der Öffnung 18 übereinstimmt, berührt der Sekundärkolben 16 bei Eintritt in die Öffnung 18 das Widerstandselement 17 an seinem Umfang, wodurch es zu einer Reibung kommt, welche nur durch Aufbringen einer größeren Kraft am Fahrpedal 3 durch den Fahrzeugnutzer überwunden werden kann. Dadurch erhält der Fahrzeugnutzer eine haptische Rückmeldung. Die Bremskraft am Sekundärkolben 16 wird dabei durch die von der Reibkraftsteuereinheit 11 am Reibelement 19 eingestellte Anpresskraft bestimmt. Auf Grund der sinusförmigen Ausbildung der Oberfläche des Sekundärkolbens 16 variiert die an dem Reibelement 19 auftretende Reibkraft in Abhängigkeit des Weges, welchen das Fahrpedal 3 und somit der Arbeitskolben 5 zurück gelegt haben.

Der beschriebene Pedalsimulator 2 ist für ein nicht hydraulisches Betätigungssystem, insbesondere ein rein elektrisches Fahrzeugkupplungssystem vorgesehen. Er kann alternativ aber auch für beliebige andere Betätigungssysteme wie beispielsweise Bremssysteme, eingesetzt werden, die auch statt eines Pedals ein beliebig anderes Betätigungselement aufweisen können.

### Bezugszeichenliste

- 1: Kupplungsbetätigungssystem
- 2: Pedalsimulator
- 3: Kupplungspedal
- 4: Kolbenstange
- 5: Arbeitskolben
- 6: Wegsensoreinheit
- 7: Elektrische Leitung
- 8: Steuer- und Leistungseinheit
- 9: Hydraulische Leitung
- 10: Kupplung
- 11: Reibkraftsteuereinheit
- 12: Stellglied
- 13: Anschluss
- 14: Zylinder
- 15: Führungselement
- 16: Sekundärkolben
- 17: Widerstandselement
- 18: Öffnung
- 19: Reibelement
- 20: Rückstellfeder
- 21: Leitung

## Patentansprüche

1. Vorrichtung zur Kraftsimulation an einem Betätigungselement eines Fahrzeuges, vorzugsweise ein Pedalsimulator, welcher eine haptische Rückmeldung über ein vorgegebenes Kraft-Weg-Verhalten vermittelt, umfassend eine Kolben-Zylinder-Einheit (5, 14), wobei ein Kolben (5) über eine Kolbenstange (4) mit dem Betätigungselement (3) verbunden ist, welches den Kolben (5, 16) innerhalb des Zylinders (14) axial bewegt, **dadurch gekennzeichnet, dass** in den Zylinder (14) annähernd senkrecht zur Bewegungsrichtung des Kolbens (5, 16) ein Widerstandselement (17) hineinragt, an welchem der Kolben (16) ab einer gewissen Stellung des Betätigungselementes (3) reibend entlang bewegbar ist.

2. Vorrichtung nach Anspruch 1, **dadurch gekennzeichnet, dass** das Widerstandselement (17) durchgehend an einem Innenumfang des Zylinders (14) angeordnet ist und eine Öffnung (18) aufweist.

3. Vorrichtung nach Anspruch 2, **dadurch gekennzeichnet, dass** eine Außenkontur des Kolbens (16) in Richtung des Widerstandselementes (17) sinusähnlich ausgebildet ist.

4. Vorrichtung nach Anspruch 1, 2 oder 3 **dadurch gekennzeichnet, dass** der Kolben (5, 16) als Sekundärkolben (16) ausgebildet ist, welcher in die Öffnung (18) des Widerstandselementes (17) eingreift und an einem, mit der Kolbenstange (4) verbundenen Arbeitskolben (5) befestigt ist.

5. Vorrichtung nach mindestens einem der vorhergehenden Ansprüche, **dadurch gekennzeichnet, dass** die Öffnung (18) des Widerstandselementes (17) einen variablen Durchmesser aufweist.

6. Vorrichtung nach Anspruch 5, **dadurch gekennzeichnet, dass** das Widerstandselementes (17) ein, die Öffnung (18) umgebendes Reibelement (19) aufweist, dessen Reibkraft von einem Stellglied (12), vorzugsweise einem Stellmotor, einstellbar ist.

7. Vorrichtung nach mindestens einem der vorhergehenden Ansprüche, **dadurch gekennzeichnet, dass** die Reibkraft in Abhängigkeit von einer Betätigungsgeschwindigkeit und/oder eines Weges des Betätigungselementes (3) einstellbar ist.

8. Vorrichtung nach mindestens einem der vorhergehenden Ansprüche, **dadurch gekennzeichnet, dass** die Kolbenstange (4) und der Zylinder (14), zumindest teilweise, mit einer Rückstellfeder (20) verbunden sind.

9. Einrichtung zur Betätigung eines elektrischen Kupplungssystems, bei welchem ein Betätigungselement (3) mit einer Vorrichtung zur Kraftsimulation (2) an dem Betätigungselement (3) verbunden ist, wobei die Stellung des Betätigungselementes (3) von einer Sensoreinheit (6) erfasst und elektrisch an eine Steuereinheit (8) weitergegeben wird, welche mit einer Kupplung (10) in einer Wirkverbindung steht, **dadurch gekennzeichnet, dass** die Vorrichtung zur Kraftsimulation (2) nach mindestens einem der vorhergehenden Ansprüche 1 bis 8 ausgebildet ist.

10. Einrichtung nach Anspruch 9, **dadurch gekennzeichnet, dass** die Steuereinheit (8) über eine Reibkraftsteuereinheit (11) und ein elektrisches, hydraulisches oder pneumatisches Stellglied (12) mit einem Reibelement (19) des Widerstandselementes (17) verbunden ist.

## Claims

1. A device for force simulation at a service element of a vehicle, preferably a pedal simulator, which provides haptic feedback about a specified force-displacement behaviour, comprising a piston-cylinder unit (5, 14), wherein a piston (5) is connected via a piston rod (4) to the service element (3) which axially moves the piston (5, 16) within the cylinder (14), **characterised in that** a resistance element (17) protrudes approximately perpendicular to the direction of movement of the piston (5, 16) into the cylinder (14), on which resistance element the piston (16) can be frictionally moved along from a certain position of the service element (3).

2. The device according to claim 1, **characterised in that** the resistance element (17) is arranged continuously on an inner circumference of the cylinder (14) and has an opening (18).

3. The device according to claim 2, **characterised in that** an outer contour of the piston (16) is sinusoidally formed in the direction of the resistance element (17).

4. The device according to any one of claims 1, 2 or 3, **characterised in that** the piston (5, 16) is designed as a secondary piston (16) which engages in the opening (18) of the resistance element (17) and is attached to one working piston (5) that is connected with the piston rod (4).

5. The device according to at least one of the preceding claims, **characterised in that** the opening (18) of the resistance element (17) has a variable diameter.

6. The device according to claim 5, **characterised in that** the resistance element (17) has a friction element (19) surrounding the opening (18), the frictional force of which can be adjusted by an actuating element (12), preferably a servomotor.

7. The device according to at least one of the preceding claims, **characterised in that** the frictional force can be set as a function of an actuating speed and/or a displacement of the service element (3).

8. The device according to at least one of the preceding claims, **characterised in that** the piston rod (4) and the cylinder (14) are, at least partially, connected to a return spring (20).

9. An arrangement to activate an electrical clutch system, in which a service element (3) is connected to a device for force simulation (2) at the service element (3), wherein the position of the service element (3) is detected by a sensor unit (6) and is electrically forwarded to a control unit (8), which is in operative connection with a clutch (10), **characterised in that** the device for force simulation (2) is designed according to at least one of the preceding claims 1 to 8.

10. The arrangement according to claim 9, **characterised in that** the control unit (8) is connected to a friction element (19) of the resistance element (17) via a friction force control unit (11) and an electrical, hydraulic or pneumatic actuating element (12).

## Revendications

1. Dispositif de simulation de force pour un élément de service d'un véhicule, de préférence un simulateur de pédale, qui fournit un retour haptique sur un comportement de déplacement de force donné, comprenant une unité piston-cylindre (5, 14), un piston (5) étant relié via une tige de piston (4) à l'élément de service (3) qui déplace le piston (5, 16) axialement à l'intérieur du cylindre (14), **caractérisé en ce que**, dans le cylindre (14), un élément de résistance (17) fait saillie de manière approximativement perpendiculaire à la direction de déplacement du piston (5, 16), sur lequel le piston (16) peut être déplacé longitudinalement par friction à partir d'une certaine position de l'élément de service (3).

2. Dispositif selon la revendication 1, **caractérisé en ce que** l'élément de résistance (17) est disposé de manière continue sur une circonférence interne du cylindre (14) et présente une ouverture (18).

3. Dispositif selon la revendication 2, **caractérisé en ce qu'**un contour extérieur du piston (16) est formé sinusoïdal en direction de l'élément de résistance (17).

4. Dispositif selon la revendication 1, 2 ou 3, **caractérisé en ce que** le piston (5, 16) est formé comme un piston secondaire (16) qui vient en prise dans l'ouverture (18) de l'élément de résistance (17) et est fixé au niveau d'un piston de travail (5) relié à la tige de piston (4).

5. Dispositif selon au moins l'une quelconque des revendications précédentes, **caractérisé en ce que** l'ouverture (18) de l'élément de résistance (17) présente un diamètre variable.

6. Dispositif selon la revendication 5, **caractérisé en ce que** l'élément de résistance (17) présente un élément de friction (19) entourant l'ouverture (18), dont la force de friction peut être réglée par un actionneur (12), de préférence un moteur de réglage.

7. Dispositif selon au moins l'une quelconque des revendications précédentes, **caractérisé en ce que** la force de friction peut être réglée en fonction d'une vitesse de service et/ou d'une trajectoire de l'élément de service (3).

8. Dispositif selon au moins l'une quelconque des revendications précédentes, **caractérisé en ce que** la tige de piston (4) et le cylindre (14) sont, au moins partiellement, reliés à un ressort de rappel (20).

9. Arrangement pour activer un système d'embrayage électrique, dans lequel un élément de service (3) est relié à un dispositif de simulation de force (2) pour l'élément de service (3), la position de l'élément de service (3) étant détectée par une unité de détection (6) et électriquement transmise à une unité de commande (8), qui est en liaison fonctionnelle avec un embrayage (10), **caractérisé en ce que** le dispositif de simulation de force (2) est conçu selon au moins l'une quelconque des revendications 1 à 8 précédentes.

10. Arrangement selon la revendication 9, **caractérisé en ce que** l'unité de commande (8) est reliée à un élément de friction (19) de l'élément de résistance (17) par l'intermédiaire d'une unité de commande de force de friction (11) et un actionneur (12) électrique, hydraulique ou pneumatique.
